# EUROPÄISCHE PATENTSCHRIFT

(11) **EP 1 274 365 B1**
(45) Veröffentlichungstag und Bekanntmachung des Hinweises auf die Patenterteilung: **25.06.2008**
(21) Anmeldenummer: 01936188.0
(22) Anmeldetag: 05.04.2001
(51) Int. Cl.: A61C 8/00, A61D 5/00

(54) **PFOSTENFÖRMIGES ELEMENT ZUR BESTIMMUNG DER RÄUMLICHEN POSITION EINES IMPLANTATS**
POST-SHAPED ELEMENT FOR DETERMINING SPATIAL POSITION OF AN IMPLANT
ELEMENT EN FORME DE TIGE SERVANT A DETERMINER LA POSITION SPATIALE D'UN IMPLANT

(30) Priorität: 19.04.2000 DE 10019332
(43) Veröffentlichungstag der Anmeldung: 15.01.2003
(73) Patentinhaber: Heraeus Kulzer GmbH, 63450 Hanau (DE)
(72) Erfinder: AUGTHUN, Michael, 45470 Mülheim (DE); PETERS, Manfred, 38302 Wolfenbüttel (DE); HASELHUHN, Klaus, 52064 Aachen (DE); SPIEKERMANN, Hubertus, 42718 Haan (DE)
(74) Vertreter: Kühn, Hans-Christian
(86) Internationale Anmeldenummer: PCT/EP2001/003856
(87) Internationale Veröffentlichungsnummer: WO 2001/080766

(56) Entgegenhaltungen:
- EP-A- 0 288 444
- WO-A-97/28755
- WO-A-97/28756
- WO-A-99/62421
- DE-A- 2 824 214
- US-A- 5 437 551
- US-A- 5 782 918

## Beschreibung

Die Erfindung betrifft eine Einrichtung, aufweisend ein Implantat und ein pfostenförmiges Element zur Bestimmung der räumlichen Position des Implantats oder des Öffnungsquerschnitts einer in einem Zahn relativ zu den dieses umgebenden Gewebestrukturen, wobei das pfostenförmige Element mit einem Aufnahmeabschnitt in eine angepaßte Aufnahmeausnehmung in dem Implantat einbringbar, darin verdrehsicher fixierbar und wieder daraus entfernbar ist und in einer Verbindungsposition mit einem Kragabschnitt übenden Öffnungsquerschnitt der Aufnahmeausnehmung vorsteht.

Im Bereich der Zahnmedizin werden derartige pfostenförmige Elemente als sogenannte Abdruckpfosten bezeichnet, mit denen beispielsweise Lage und Ausrichtung eines zuvor in einen Kieferknochen eingebrachten zahnmedizinischen Implantats bestimmt werden soll. Zu diesem Zweck wird das pfostenförmige Element mit seinem als Aufnahmeabschnitt ausgebildeten Unterteil in eine als Aufnahmeausnehmung fungierende Bohrung in dem Implantat eingesetzt und darin beispielsweise mit Hilfe einer axial durchgängigen Schraube in einer Gewindesackbohrung im Innern des Implantats fixiert. Der in dieser Verbindungsposition des pfostenförmigen Elements über den Öffnungsquerschnitt in dem Implantat vorstehende Kragabschnitt ist typischerweise mit einer Mehrzahl von Retensionen versehen, um einen möglichst innigen Formschluß zwischen dem Kragabschnitt und einer aushärtbaren Abdruckmasse herzustellen.

Unter Zuhilfenahme eines Abdrucklöffels wird der Raum um den Abdruckpfosten sowie die benachbarten Zähne herum mittels einer anfangs plastisch verformbaren Abdruckmasse ausgefüllt, wodurch sich die Zähne und der Abdruckpfosten nach Art eines Negativs abformen.

Der Abdrucklöffel weist in einem Bereich, der dem proximalen Ende des Kragabschnitts des Abdruckpfostens zugeordnet ist, eine Aussparung auf, um nach dem Aushärten der Abdruckmasse die Schraube zur Fixierung desselben wieder herausdrehen zu können. Nachdem die Fixierung des pfostenförmigen Elements in dem Implantat wieder aufgehoben ist, kann das pfostenförmige Element, das fomischlüssig in die Abdruckmasse eingebettet ist, zusammen mit dieser von dem Kiefer entfernt werden.

Als nachteilig tritt es in diesem Zusammenhang bei den bekannten pfostenförmigen Elementen in Erscheinung, daß bei einer Schiefstellung des Implantats bzw. einer Längsachse der künstlichen Vertiefung die Richtung, in der der Abdruckpfosten zusammen mit der ausgehärteten Abdruckmasse abgezogen werden kann, nicht mit der Längsachse des Abdruckpfostens, in deren Richtung eine Entfernung des Aufnahmeabschnitts aus der Aufnahmeausnehmung allein möglich ist, übereinstimmt. Eine Entfernung der Abdruckmasse und des pfostenförmigen Elements läßt sich in solchen Fällen einer Schiefstellung nur unter Ausnutzung der Elastizität der Abdruckmasse bewerkstelligen, wobei die Gefahr besteht, daß bei einer größeren Auslenkung des pfostenförmigen Elements aus seiner bei der Herstellung des Abdrucks eingenommenen Position zu einer plastischen Verformung der Abdruckmasse, das heißt zu einer Verfälschung der Position des Abdruckpfostens in der Abdruckmasse kommt.

WO 97/28756 A1 offenbart ein Abdrucksystem für Implantate mit einer Abdruckkappe, einer Schleberhülse und einem Sicherungszapfen. In EP 288 444 A1 ist eine Vorrichtung zur Fixierung einer Dentalprothese beschrieben. Aus US 5,782,918 A und US 5,437,551 A ist die Verankerung eines Abutments in einem Implantat bekannt. Ein Abutment dient zur Fixierung einer Prothese oder Zahnkrone.

Der Erfindung liegt die Aufgabe zugrunde, ein pfostenförmiges Element zur Bestimmung der räumlichen Position, insbesondere eines Implantats, vorzuschlagen, mit dem sich auch bei größeren Schiefstellungen des Implantats im Vergleich zu den benachbarten Zähnen oder Gewebestrukturen eine einfache und die Abdruckqualität nicht verfälschende Entfernbarkeit des pfostenförmigen Elements erreichen läßt.

Ausgehend von einem pfostenförmigen Element der eingangs beschriebenen Art, wird diese Aufgabe erfindungsgemäß durch den unabhängigen Anspruch gelöst. Unter anderem wesentlich ist, daß das pfostenförmige Element aus einem in der Aufnahmeausnehmung verdrehsicher fixierbaren Unterteil und einem in das Unterteil verdrehsicher einsetzbaren oder auf dieses aufsetzbaren Oberteil besteht, wobei das Oberteil, ausgehend von der Verbindungsposition des pfostenförmigen Elements, in unterschiedliche Richtungen linear von dem Unterteil entfernbar ist.

Während sich das Unterteil an der inneren Mantelfläche der Aufnahmeausnehmung, die in der Regel zylinderförmig bzw. leicht konisch ausgebildet ist, abstützt, und daher im wesentlichen lediglich in eine Richtung aus dem Implantat entfernbar ist, läßt sich die Trennungsebene zwischen dem Unterteil und dem Oberteil so gestalten, daß das Oberteil innerhalb eines als sinnvoll anzusehenden Winkelbereichs von bis zu beispielsweise 30° in beliebige Richtungen linear von dem Unterteil entfernbar ist. Diese Freiheit bei der Wahl der Richtung bei der Trennung von Oberteil und Unterteil ermöglicht es, auch bei größeren Schiefstellungen des Implantats in bezug auf die umgebenden Körperstrukturen eine einfache Entfernbarkeit des in die Abdruckmasse eingebetteten Teils des pfostenförmigen Elements sicherzustellen, ohne daß zweifelhafte elastische Eigenschaften des Abdruckmaterials ausgenützt werden müßten. Die Qualität des Abdrucks und die Zuverlässigkeit bei der Bestimmung der Ausrichtung eines Implantats kann mit Hilfe der Erfindung bei Schiefstellungen deutlich gesteigert werden.

Erfindungsgemäß besitzt das Unterteil eine kegelförmige, eine kegelstumpfförmige, eine pyramidenförmige oder eine pyramidenstumpfförmige Vertiefung, in die ein komplementär geformter distaler Endabschnitt des Oberteils einsetzbar ist. Hierdurch kann eine sichere Anlage von Unterteil und Oberteil in der Verbindungsposition geschaffen und dennoch eine Freiheit bei der Wahl der Entfernungsrichtung innerhalb des jeweiligen Kegel- bzw. Pyramidenwinkels gewährleistet werden.

Es ist auch möglich, daß der Kragabschnitt mit einer Anschlagfläche an einer proximalen Stimfläche des Implantats des Zahns anliegt und der Aufnahmeabschnitt einen Basisquerschnitt aufweist, dessen Begrenzungslinie in der Verbindungsposition zumindest abschnittsweise mit der Begrenzungslinie des Öffnungsquerschnitts der Aufnahmeausnehmung zusammenfällt und sich, ausgehend von dem Basisquerschnitt, in Richtung seines distalen Endes derart verjüngt, daß das pfostenförmige Element, ausgehend von der Verbindungsposition, in unterschiedliche Richtungen linear von dem Implantat, dem Zahn entfernbar ist.

Bei einem derartigen pfostenförmigen Element greift dessen Aufnahmeabschnitt derart in die Aufnahmeausnehmung in dem Implantat ein, daß in der Verbindungsposition des pfostenförmigen Elements sowohl eine Verschiebung als auch eine Verdrehung des pfostenförmigen Elements verhindert wird. Möglich und erwünscht ist jedoch die Entfernbarkeit des pfostenförmigen Elements von dem Implantat, dem Zahn und zwar ausgehend von der Verbindungsposition linear in verschiedene Richtungen, um damit auch bei einer Schiefstellung des Implantats bzw. der Längsachse der Vertiefung eine einfache und nicht zu Verfälschungen führende Abdruckanfertigung zu ermöglichen. Das erfindungsgemäße pfostenförmige Element kann einteilig ausgeführt werden, wodurch die Herstellung kostengünstig und die Montage und auch die Entfernung einfach ist.

Die Erfindung weiter ausgestaltend ist vorgesehen, daß die Basisfläche des Kegels, des Kegelstumpfs der Pyramide oder des Pyramidenstumpfs in derselben Ebene wie ein Öffnungsquerschnitt der Aufnahmeausnehmung angeordnet ist.

Wenn die Basisfläche des Kegels, des Kegelstumpfs, der Pyramide oder des Pyramidenstumpfs deckungsgleich mit dem Öffnungsquerschnitt der Aufnahmeausnehmung ist, wird eine bestmögliche Fixierung des pfostenförmigen Elements in der Verbindungsposition gewährleistet, so daß das pfostenförmige Element beim Abformen mit Hilfe der Abdruckmasse nicht ohne weiteres aus der Sollposition verlagert werden kann.

Die korrekte Einnahme der Verbindungsposition des pfostenförmigen Elements läßt sich dadurch einfach kontrollieren, daß das Oberteil in der Verbindungsposition mit einer Anschlagfläche an seiner proximalen Stirnfläche des Implantats anliegt. Die Stabilität der Verbindung wird hierdurch ebenso vergrößert, wie die Sicherheit gegen eine unbeabsichtigte Auslenkung beim Abformvorgang.

Wenn der Öffnungswinkel des Kegels, des Kegelstumpfs, der Pyramide oder des Pyramidenstumpfs zwischen 5° und 20° beträgt, kann bei den allermeisten in der Praxis vorkommenden Schiefstellungen eine Abformung ohne Verfälschungen sichergestellt werden.

Eine erfindungsgemäße Fixierung des Unterteils in dem Implantat, die zudem noch einfach wieder aufhebbar ist, besteht darin, daß das Unterteil an seinem distalen Ende mit mindestens einem Clipelement versehen ist, das mit einem radial nach außen vorstehenden Vorsprung mit einer Vertiefung in der inneren Mantelfläche der Aufnahmeausnehmung formschlüssig in Eingriff bringbar ist.

Wird das pfostenförmige Element mit einer durchgängigen zentral angeordneten Durchgangsöffnung zur Hindurchführung eines Stabelements versehen, so läßt sich zum einen die Fixierung des pfostenförmigen Elements während des Abdrucks verbessern. Zum anderen ergibt sich jedoch auch die Möglichkeit, mit Hilfe des Stabelements die korrekte Position des pfostenförmigen Elements in bezug auf das Implantat bzw. den Zahn vor Beginn der Herstellung des Abdrucks zu kontrollieren.

Die Sicherheit gegen eine unbeabsichtigte Verlagerung des pfostenförmigen Elements während des Abdrucks läßt sich erhöhen, wenn das pfostenförmige Element mit einer Anschlagfläche des Kragabschnitts an einer proximalen Stimfläche des Implantats, des Zahns temporär verklebbar ist.

Schließlich ist nach einer Ausgestaltung der Erfindung noch vorgesehen, daß es sich bei dem pfostenförmigen Element um einen Abdruckpfosten zur Bestimmung der räumlichen Position eines zahnmedizinischen Implantats handelt.

Das erfindungsgemäße pfostenförmige Element wird nachfolgend anhand eines Ausführungsbeispiels, das in der Zeichnung dargestellt ist, näher erläutert.

Es zeigt:
- Figur 1: ein Implantat mit einer eingeklipsten Verschlußkappe im Längsschnitt;
- Figur 2: eine Draufsicht auf die Verschlußkappe;
- Figur 3: eine Draufsicht auf das Implantat nach Entfernung der Verschlußkappe;
- Figur 4: einen Querschnitt entlang der Linie IV-IV durch das Implantat gemäß Figur 1;
- Figur 5: einen Querschnitt entlang der Linie V-V durch das Implantat gemäß Figur 1;
- Figur 6: einen vergrößerten Ausschnitt des Eingriffsbereichs eines Clipelements;
- Figur 7: das Implantat mit einem eingeklipsten Abdruckpfosten im Längsschnitt;
- Figur 7a: eine Draufsicht auf das Oberteil des Abdruckpfostens gemäß Figur 7;
- Figur 8: ein alternatives Implantat mit einem Abdruckpfosten mit einem Stabelement im Längsschnitt und
- Figur 9: wie Figur 8, jedoch eines Laborimplantats.

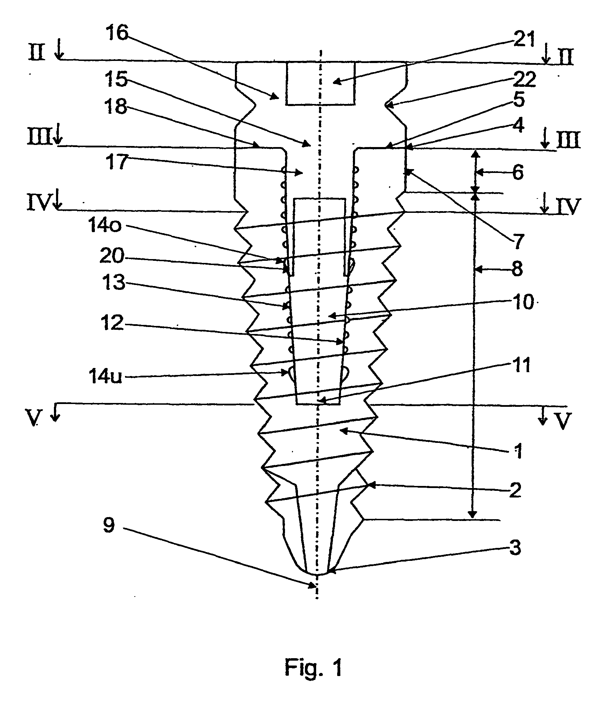

Den Figuren 1 bis 5 läßt sich ein aus Titan bestehendes Implantat 1 entnehmen, das eine ungefähr konische Grundform besitzt und an seiner äußeren Mantelfläche mit einem Außengewinde 2 versehen ist: Das Implantat 1 besitzt ein abgerundetes distales Ende 3 und ein proximales Ende 4, das von einer im wesentlichen kreisringförmigen Stirnfläche 5 gebildet wird. In einem an die Stirnfläche 5 angrenzenden Abschnitt 6 besitzt das Implantat 1 eine zylindrische Form mit einer hochglanzpolierten Mantelfläche 7. In einem darauf folgenden Gewindeabschnitt 8 ist das Implantat 1 konisch ausgeformt. Ausgehend von der Stirnfläche 5 erstreckt sich parallel zu einer Längsachse 9 des Implantats eine Aufnahmeausnehmung 10, die über die gesamte Länge des Abschnitts 6 sowie einen Teil der Länge des Gewindeabschnitts 8 verläuft.

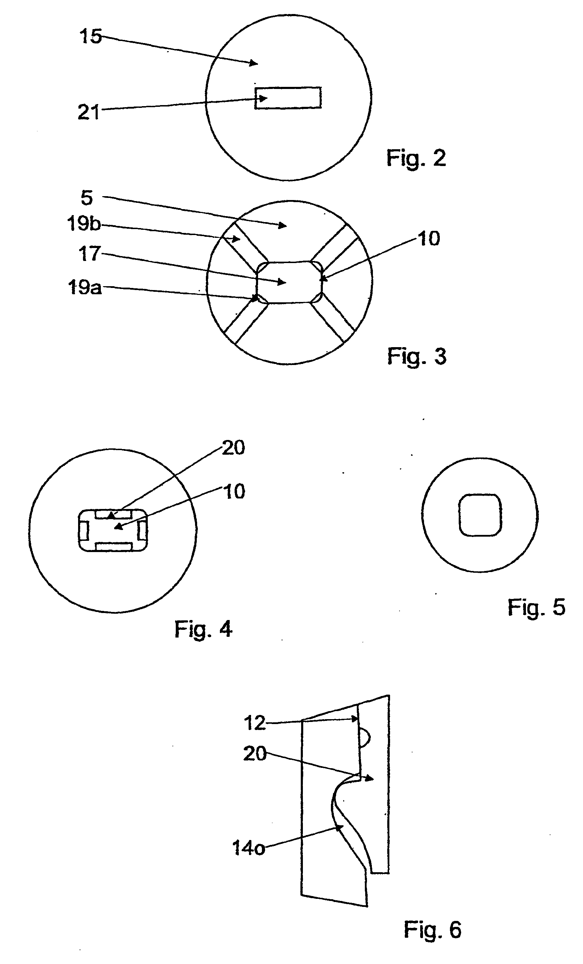

Wie sich der Figur 3 entnehmen läßt, besitzt der Querschnitt der Aufnahmeausnehmung 10 im Bereich des Abschnitts 6 durchgängig die Form eines abgerundeten Rechtecks. Beginnend mit dem Gewindeabschnitt 8 verjüngt sich der Querschnitt der Aufnahmeausnehmung 10 dahingehend kontinuierlich, daß am Grund 11 der Aufnahmeausnehmung 10 der Querschnitt die Form eines abgerundeten Quadrats (vgl. Figur 5) aufweist. Der Übergang von der abgerundeten rechteckigen zur abgerundeten quadratischen Querschnittsform erfolgt kontinuierlich und ohne Sprünge.

Wie sich insbesondere der Figur 1 entnehmen läßt, ist die Wandung 12 der Aufnahmeausnehmung 10 mit einer Vielzahl von Ringnuten 13 versehen, die senkrecht zur Längsachse 9 ausgerichtet sind. Des weiteren ist die Wandung 12 mit einer oberen und einer unteren Ringnut 14o und 14u versehen, deren Funktion später erläutert wird.

In das in Figur 1 dargestellte Implantat 1 ist eine Verschlußkappe 15 eingesetzt, die aus einem ungefähr zylinderförmigen Kopfteil 16 und einem koaxial hierzu ausgerichteten Verbindungszapfen 17 besteht, der sich in die Aufnahmeausnehmung 10 erstreckt. Eine Kontaktfläche 18 des Kopfteils 16 kommt an der Stirnfläche 5 des Implantats 1 kraftschlüssig zur Anlage.

Wie sich der Figur 3 entnehmen läßt, weist der Verbindungszapfen 17 in einem oberen Abschnitt einen ungefähr rechteckförmigen Querschnitt auf, wobei die Eckbereiche derart gebrochen sind, daß in den Rundungsbereichen des Querschnitts der Aufnahmeausnehmung 10 zwischen dem Verbindungszapfen 17 und der Wandung 12 der Aufnahmeausnehmung 10 vier Entlüftungskanäle 19a gebildet werden. Beim Einschieben des Verbindungszapfens 17 in die Aufnahmeausnehmung 10 verdrängte Luft kann daher, ohne daß es zu einem den Montagevorgang behindernden Druckaufbau kommt, nach oben abgeführt werden, wobei die Luft durch vier radial nach außen verlaufende Entlüftungsnuten 19b, die in die Stirnfläche 5 des Implantats eingebracht sind und mit den Entlüftungskanälen 19a kommunizieren, nach außen entweichen kann.

Im Einbauzustand der Verschlußkappe 15 liegen die äußeren Mantelflächen des Verbindungszapfens 17 und die Wandung 12 der Aufnahmeausnehmung 10 sowie die Stirnfläche 5 und die Kontaktfläche 18 kraftschlüssig aneinander.

Da die Verschlußkappe 15 lediglich temporär nach der Implantation an dem Implantat 1 verbleibt, ist diese lediglich mit Hilfe von vier Clipelementen 20, die in die Ringnut 14o eingreifen, mit dem Implantat 1 verbunden. Anstelle des in Figur 1 gezeigten Eingriffs der Clipelemente 20 in die obere Ringnut 14o, ist bei einem entsprechend verlängerten Verbindungszapfen 17 auch ein Eingriff in die untere Ringnut 14u möglich.

Die Verschlußkappe 15 wird bereits vom Hersteller des Implantats 1 in dieses eingesetzt und dient einerseits dazu, das Implantat 1 nach Anfertigung einer entsprechenden Bohrung im Knochen mit Hilfe eines Schraubendrehers, der in den in Figur 2 gezeigten Schlitz 21 eingreift, einzudrehen. Aufgrund des annähernd rechteckförmigen Querschnitts des Verbindungszapfens 17 und der angepaßten Aufnahmeausnehmung 10 ist eine Drehmomenteinleitung über die Verschlußkappe 15 in das Implantat 1 möglich. Nach der Implantation verbleibt die Verschlußkappe 15 im Implantat 1, um zum anderen die Aufnahmeausnehmung 10 vor äußeren Verschmutzungen zu schützen.

Ca. 3 bis 6 Monate nach Einsetzen des Implantats 1 in den Kieferknochen ist die Einheilung soweit abgeschlossen, daß die die Verschlußkappe 15 abdeckende Schleimhaut in einer zweiten Operation wieder geöffnet werden kann. Die Verschlußkappe 15 wird entfernt, wozu mit Hilfe eines zangenartigen Werkzeugs in eine V-förmige Ringnut 22 in dem Kopfteil 16 eingegriffen wird und hierdurch die gesamte Verschlußkappe 15 durch einen leichten Ruck in axiale Richtung nach oben aus dem Implantat entfernt wird. In die Aufnahmeausnehmung 10 des Implantats 1 wird nunmehr ein Verbindungszapfen 17 eines sogenannten Gingiva-Formers eingesetzt, der in den Figuren nicht dargestellt ist. Das Befestigungsprinzip des Gingiva-Formers ist dasselbe wie bei der Verschlußkappe.

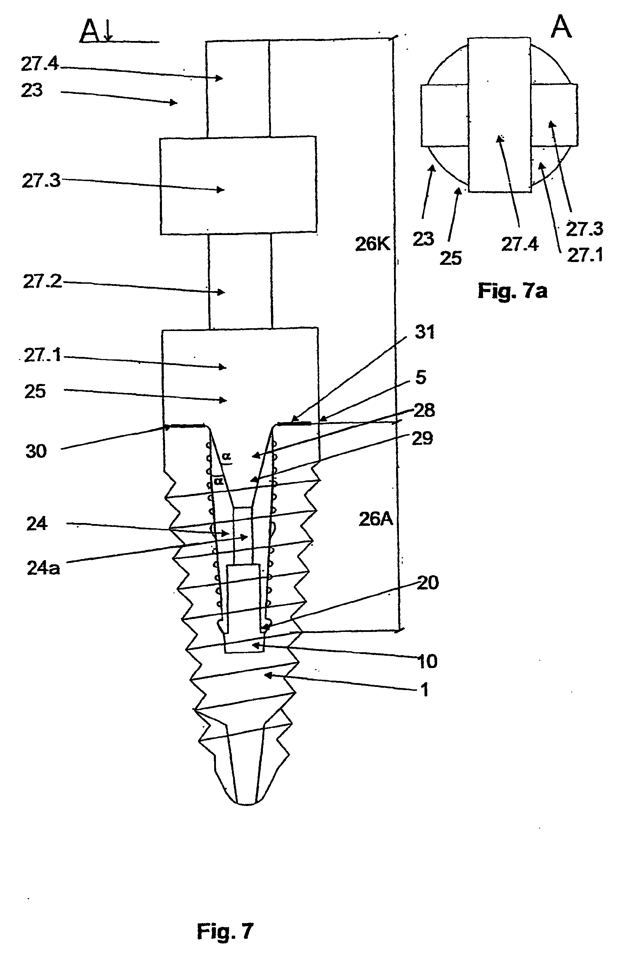

Um einen in dem Implantat 1 zu verankernden Ersatzzahn außerhalb des Mundraumes des Patienten an einem Modell des Kiefers anpassen zu können, wird ein Abdruck des Gebisses hergestellt. Zu diesem Zweck wird in die Aufnahmeausnehmung 10 des Implantats 1 ein in Figur 7 gezeigtes pfostenförmiges Element in Form eines Abdruckpfostens 23 eingesetzt. Der Abdruckpfosten 23 besteht aus einem mittels vier Clipelementen 20 fixierbaren Unterteil 24 und einem in das Unterteil 24 verdrehsicher einsetzbaren Oberteil 25. Das Oberteil 25 steht mit einem Kragabschnitt 26K über den Öffnungsquerschnitt der Aufnahmeausnehmung 10 vor und ist seinerseits aus vier quaderförmigen Körpern 27.1 bis 27.4 zusammengesetzt. Der unterste Körper 27.1 weist einen kegelförmigen Endabschnitt 28 mit einem elliptischen Querschnitt auf, der in eine komplementär geformte Vertiefung 29 in dem Unterteil 24 des Abdruckpfostens 23 eingreift. Das Unterteil 24 besitzt dieselbe Länge wie ein Aufnahmeabschnitt 26A des Implantats 1 und schließt mit seiner Oberkante bündig mit der Stirnfläche 5 des Implantats 1 ab. Die Vertiefung 29 erstreckt sich unmittelbar von dem Niveau der Stirnfläche 5 aus und besitzt einen Öffnungsquerschnitt, der nur geringfügig kleiner als der Öffnungsquerschnitt der Aufnahmeausnehmung 10 in dem Implantat 1 selbst ist.

Wie sich der Draufsicht auf das Oberteil 25 des Abdruckpfostens 23 gemäß Figur 7a entnehmen läßt, sind die quaderförmigen Körper 27.1 bis 27.4, die einen rechteckförmigen Grundriß besitzen, abwechselnd um 90° zueinander verdreht, das heißt kreuzförmig getürmt, angeordnet.

Der unterste Körper 27.1 des Oberteils 25 des Abdruckpfostens 23 liegt mit einer kreisringförmigen Kontaktfläche 30 an der Stirnfläche 5 des Implantats 1 an, wobei zwecks sicherer Fixierung des Abdruckpfostens 23 an dem Implantat 1 an der Kontaktfläche 30 nach der spritzgußtechnischen Herstellung des Abdruckpfostens 23 ein dünner umlaufender Klebering 31 angebracht ist, der sich nach erfolgter Abformung mit einem leichten Ruck wieder von der Stirnfläche 5 des Implantats 1 ablösen läßt.

Ausgehend von der in Figur 7 dargestellten Verbindungsposition wird das Oberteil 25 des Abdruckpfostens 23 mit einer fließfähigen und aushärtenden Abdruckmasse umgeben. Nach der Aushärtung ist der Abdruckpfosten 23 ohne Zerstörung der formschlüssigen Verbindung im Bereich seines Oberteils 25 nicht mehr aus der Abdruckmasse zu entfernen. Vielmehr wird der Abformlöffel, innerhalb dessen sich die Abdruckmasse befindet, zusammen mit dem Abdruckpfosten 23 entfernt, wobei die Klebeverbindung in Form des Kleberings 31 durch einen leichten Ruck aufgehoben wird. Aufgrund der im Querschnitt ellipsenförmigen Kegelverbindung zwischen dem Oberteil 25 und dem Unterteil 24 des Abdruckpfostens 23 läßt sich das Oberteil 25 linear in unterschiedliche Richtungen aus dem Implantat 1 bzw. dem zunächst zurückbleibenden Unterteil 24 entfernen. Die Grenzen der möglichen Bewegungsrichtungen werden durch die Mantelfläche des Kegels des Endabschnitts 28 bzw. der komplementären Vertiefung 29 definiert, wenn fliese Mantelfläche gedanklich über die Stirnfläche 5 des Implantats 1 hinaus nach oben erweitert wird. Aufgrund der speziellen Verbindung des Unterteils 24 mit dem Oberteil 25 läßt sich letzteres auch dann spannungsfrei und ohne Kräfte auf die Abdruckmasse auszuüben aus dem Mundraum entfernen, wenn die Längsachse des Implantats 1 eine nicht unerhebliche Schiefstellung im Vergleich zu den benachbarten Zähnen aufweist. Im Unterteil 24 befindet sich eine Durchgangsbohrung 24a. Mit Hilfe z.B. einer Haken- oder Spreizzange - eingeführt durch die Bohrung 24a - kann später das Unterteil 24 aus dem Implantat mit leichter axialer Kraft herausgezogen werden.

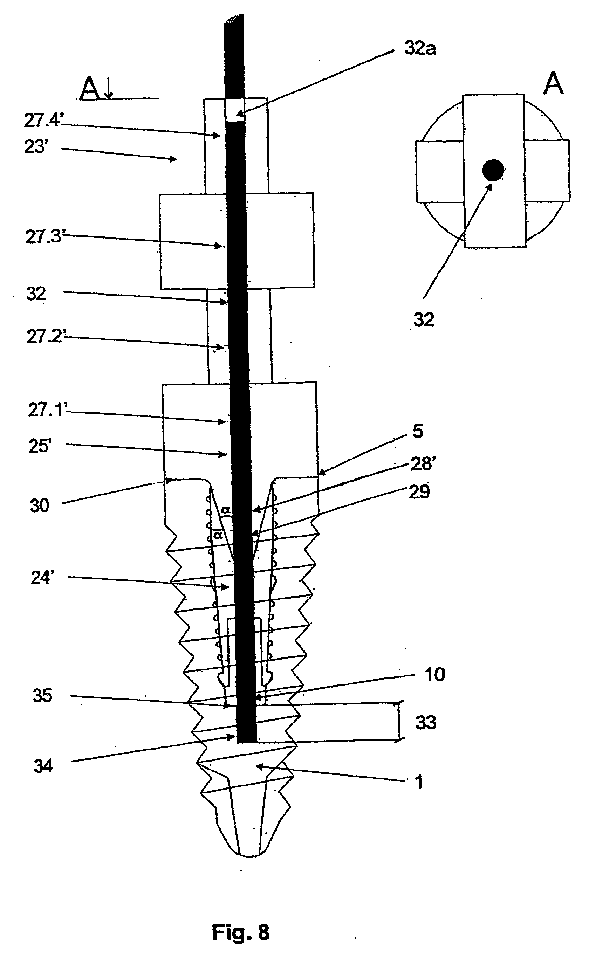

Der in Figur 8 dargestellte Abdruckpfosten 23' unterscheidet sich insofern von dem Abdruckpfosten 23 gemäß Figur 7, als er eine durchgängige zentral angeordnete Durchgangsöffnung aufweist, in die ein daran angepaßtes Stabelement 32 eingesetzt ist. Das Stabelement 32, das sich durch sämtliche Körper 27.1' bis 27.4' erstreckt, dringt mit seinem distalen Endabschnitt 33 in eine daran angepaßte Sacköffnung 34 in dem Grund 35 der Aufnahmeausnehmung 10 ein. Die Durchgangsöffnung für das Stabelement 32 erstreckt sich ebenfalls durch den Endabschnitt 28' des zylindrischen Körpers 27. 1' sowie das Unterteil 24'.

Zum einen läßt sich mit dem Stabelement 32 die korrekte Positionierung des Abdruckpfostens 23' kontrollieren und zwar, wenn hierzu im proximalen Endbereich des Stabelements 32 mindestens eine Markierung 32a vorhanden ist, die im Falle einer korrekten Anlage der Kontaktfläche 30 des Körpers 27. 1' an der Stimfläche 5 des Implantats 1, beispielsweise gerade eben in der Durchgangsöffnung des obersten Körpers 27.4' verschwunden ist oder in die Durchgangsöffnung gerade noch nicht eingetreten ist.

Ein anderer Vorteil des Stabelements 32 ist darin zu sehen, daß hierdurch der Abdruckpfosten 23' eine größere Stabilität erhält. Insbesondere wird verhindert, daß sich bei dem Abformvorgang, beispielsweise durch die Kraftwirkungen der Abdruckmasse, das Oberteil 25' des Abdruckpfostens 23' relativ zu dem Unterteil 24' verschieben kann.

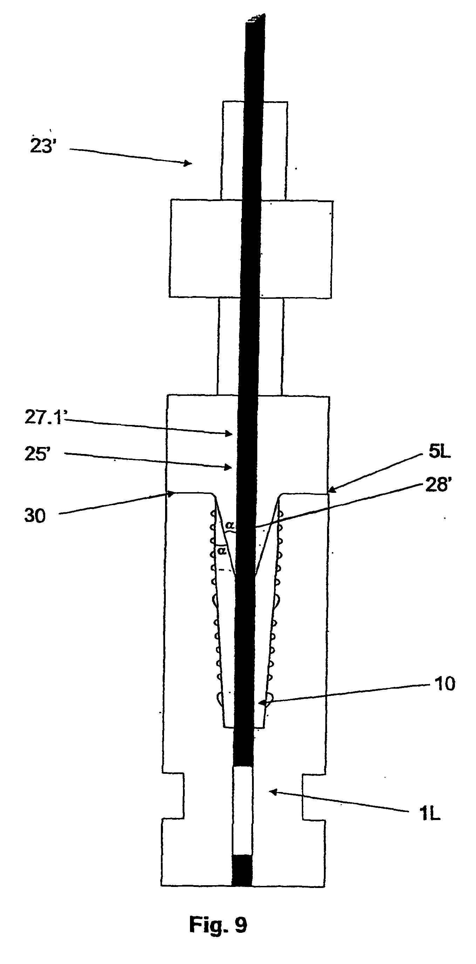

Figur 9 zeigt schließlich noch, wie der Abdruckpfosten 23' nach der Abformung in ein Laborimplantat 1 L eingesetzt ist, dessen Aufnahmeausnehmung 10 mit der des originalen Implantats 1 gemäß Figur 8 übereinstimmt. Das Unterteil 24' des Abdruckpfostens 23' ist in der Darstellung gemäß Figur 9 nicht in die Aufnahmeausnehmung 10 eingesetzt. Vielmehr wird das Oberteil 25' des Abdruckpfostens 23 in diesem Fall durch den Endabschnitt 28' an dem unteren Körper 27.1' in seiner korrekten Verbindungsposition gehalten, in der die Kontaktfläche 30 an der Stimfläche 5L des Laborimplantats 1L anliegt.

Zusätzlich dringt das Stabelement 32 mit seinem distalen Ende 33' in eine Bohrung 34' in den Grund 35' der Aufnahmeausnehmung 10' ein. Hierdurch wird die korrekte Verbindungsposition zwischen Laborimplantat 1L und Abdruckpfosten 23' gewährleistet.

## Patentansprüche

1. Einrichtung, aufweisend ein Implantat und ein pfostenförmiges Element zur Bestimmung der räumlichen Position des Implantats (1) relativ zu den dieses umgebenden Gewebestrukturen, wobei das pfostenförmige Element mit einem Aufnahmeabschnitt (26A) in eine angepaßte Aufnahmeausnehmung (10) in dem Implantat (1) einbringbar, darin verdrehsicher fixierbar und wieder daraus entfernbar ist und in einer Verbindungsposition mit einem Kragabschnitt (26K) über den Öffnungsquerschnitt der Aufnahmeausnehmung (10) vorsteht, wobei das pfosten förmige Element aus einem in der Aufnahmeausnehmung (10) fixierbaren Unterteil (24, 24') und einem in das Unterteil (24, 24') verdrehsicher einsetzbaren oder auf dieses aufsetzbaren Oberteil (25, 25') besteht, wobei das Oberteil (25, 25'), ausgehend von der Verbindungsposition des pfostenförmigen Elements, in unterschiedliche Richtungen linear von dem Unterteil (24, 24') entfernbar ist, indem das Unterteil (24, 24') eine kegelförmige, eine kegelstumpfförmige, eine pyramidenförmige oder eine pyramidenstumpfförmige Vertiefung (29) besitzt, in die ein komplementär geformter distaler Endabschnitt (28, 28') des Oberteils (25, 25') einsetzbar ist und wobei das Unterteil (24) an seinem distalen Ende mit mindestens einem Clipelement (20) versehen ist, das mit einem radial nach außen vorstehenden Vorsprung mit einer Vertiefung in der inneren Mantelfläche der Aufnahmeausnehmung (10) formschlüssig in Eingriff bringbar ist.

2. Einrichtung nach Anspruch 1, **dadurch gekennzeichnet, daß** die Basisfläche des Kegels, des Kegelstumpfs, der Pyramide oder des Pyramidenstumpfs in derselben Ebene wie ein Öffnungsquerschnitt der Aufnahmeausnehmung (10) angeordnet ist.

3. Einrichtung nach Anspruch 1 oder 2, **dadurch gekennzeichnet, daß** die Basisfläche des Kegels, des Kegelstumpfs, der Pyramide oder des Pyramidenstumpfs deckungsgleich mit dem Öffnungsquerschnitt der Aufnahmeausnehmung (10) ist.

4. Einrichtung nach einem der Ansprüche 1 bis 3, **dadurch gekennzeichnet, daß** das Oberteil (25) in der Verbindungsposition mit einer Anschlagfläche (30) an einer proximalen Stimfläche (5) des Implantats (1) anliegt.

5. Einrichtung nach einem der Ansprüche 1 bis 4, **dadurch gekennzeichnet, daß** der Öffnungswinkel des Kegels, des Kegelstumpfs, der Pyramide oder des Pyramidenstumpfs zwischen 5° und 20° beträgt.

6. Einrichtung nach einem der Ansprüche 1 bis 5, **dadurch gekennzeichnet, daß** das Unterteil (24) an seinem distalen Ende mit mindestens einem Clipelement (20) versehen ist, das mit einem radial nach außen vorstehenden Vorsprung mit einer Vertiefung in der inneren Mantelfläche der Aufnahmeausnehmung (10) formschlüssig in Eingriff bringbar ist.

7. Einrichtung nach einem der Ansprüche 1 bis 6, **dadurch gekennzeichnet, daß** das pfostenförmige Element mit einer durchgängigen zentral angeordneten Durchgangsöffnung zur Hindurchführung eines Stabelements (32) versehen ist.

8. Einrichtung nach einem der Ansprüche 1 bis 7, **dadurch gekennzeichnet, daß** das pfostenförmige Element mit einer Anschlagfläche (30) des Kragabschnitts (26K) an einer proximalen Stirnfläche (S) des Implantats (1) des Zahns temporär verklebbar ist.

9. Einrichtung nach einem der Ansprüche 1 bis 8, **dadurch gekennzeichnet, daß** das pfostenförmige Element ein Abdruckpfosten (23, 23') zur Bestimmung der räumlichen Position eines zahnmedizinischen Implantats (1) ist.

## Claims

1. Device comprising an implant and a post-like element for determining the spatial position of the implant (1) relative to surrounding tissue structures, wherein the post-like element is, by a seat portion (26A), insertable into a matched seating recess (10) in the implant (1), untwistably fixable therein, and removable therefrom, and, in a connected position, projects, by a collar portion (26K), beyond the opening cross section of the seating recess (10), wherein the post-like element consists of a lower part (24, 24') fixable in the seating recess (10) and an upper part (25, 25') untwistably insertable in the lower part (24, 24') or seatable thereon, wherein the upper part (25, 25'), starting from the connected position of the post-like element, is linearly removable from the lower part (24, 24') in different orientations by virtue of the fact that the lower part (24, 24') possesses an indentation (29) shaped as a cone, a conical frustum, a pyramid or a pyramidal frustum into which a distal end portion (28, 28') of the upper part (25, 25'), which has a mating shape, is insertable, and wherein the lower part (24) is provided at its distal end with at least one clip element (20) that is positively engageable, by a radially outwards jutting projection, with an indentation in the inner circumferential surface of the seating recess (10).

2. Device according to Claim 1, **characterized in that** the base of the cone, conical frustum, pyramid or pyramidal frustum is located in the same plane as an opening cross section of the seating recess (10).

3. Device according to Claim 1 or Claim 2, **characterized in that** the base of the cone, conical frustum, pyramid or pyramidal frustum is congruent with the opening cross section of the seating recess (10).

4. Device according to any one of Claims 1 to 3, **characterized in that** in the connected position the upper part (25) bears by a stop face (30) on a proximal end face (5) of the implant (1).

5. Device according to any one of Claims 1 to 4, **characterized in that** the apex angle of the cone, conical frustum, pyramid or pyramidal frustum is between 5° and 20°.

6. Device according to any one of Claims 1 to 5, **characterized in that** the lower part (24) is provided at its distal end with at least one clip element (20) that is positively engageable, by a radially outwards jutting projection, with an indentation in the inner circumferential surface of the seating recess (10).

7. Device according to any one of Claims 1 to 6, **characterized in that** the post-like element is provided with a through-going central passageway for the insertion of a rod element (32).

8. Device according to any one of Claims 1 to 7, **characterized in that** the post-like element is temporarily gluable by a stop face (30) of the collar portion (26K) to a proximal end face (5) of the tooth implant (1).

9. Device according to any one of Claims 1 to 8, **characterized in that** the post-like element is an impression post (23, 23') for determining the spatial position of a dental implant (1).

## Revendications

1. Dispositif comprenant un implant et un élément en forme de pivot pour déterminer la position spatiale de l'implant (1) par rapport aux structures de tissus qui l'entourent,
dans lequel l'élément en forme de pivot peut être introduit avec un tronçon de réception (26A) dans un évidement de réception (10) adapté de l'implant (1), y être fixé de manière arrêtée en rotation relative et à nouveau en être retiré, et, dans une position assemblée, fait saillie, avec un tronçon en porte-à-faux (26K), au-dessus de la section transversale d'ouverture de l'évidement de réception (10),
dans lequel l'élément en forme de pivot est constitué d'une partie inférieure (24, 24') qui peut être fixée dans l'évidement de réception (10), et d'une partie supérieure (25, 25') qui peut être insérée de manière arrêtée en rotation dans la partie inférieure (24, 24') ou être rapportée sur celle-ci,
dans lequel la partie supérieure (25, 25') peut, à partir de la position assemblée de l'élément en forme de pivot, être retirée linéairement, selon différentes directions, de la partie inférieure (24, 24'), grâce au fait que la partie inférieure (24, 24') possède un creux (29) en forme de cône, en forme de tronc de cône, en forme de pyramide ou en forme de tronc de pyramide, dans lequel peut être inséré un tronçon d'extrémité distal (28, 28') de forme complémentaire de la partie supérieure (25, 25'),
et dans lequel la partie inférieure (24) est pourvue à son extrémité distale, d'au moins un élément d'encliquetage (20), qui, avec une protubérance en saillie radiale vers l'extérieur, peut être amené en prise par complémentarité de formes, avec un creux dans la surface périphérique intérieure de l'évidement de réception (10).

2. Dispositif selon la revendication 1, **caractérisé en ce que** la surface de base du cône, du tronc de cône, de la pyramide ou du tronc de pyramide est agencée dans le même plan qu'une section transversale d'ouverture de l'évidement de réception (10).

3. Dispositif selon la revendication 1 ou 2, **caractérisé en ce que** la surface de base du cône, du tronc de cône, de la pyramide ou du tronc de pyramide coïncide avec la section transversale d'ouverture de l'évidement de réception (10).

4. Dispositif selon l'une des revendications 1 à 3, **caractérisé en ce que** la partie supérieure (25), dans la position assemblée, s'appuie avec une surface de butée (30), sur une face frontale proximale (5) de l'implant (1) .

5. Dispositif selon l'une des revendications 1 à 4, **caractérisé en ce que** l'angle d'ouverture du cône, du tronc de cône, de la pyramide ou du tronc de pyramide se situe entre 5° et 20°.

6. Dispositif selon l'une des revendications 1 à 5, **caractérisé en ce que** la partie inférieure (24) est pourvue à son extrémité distale, d'au moins un élément d'encliquetage (20) qui, avec une protubérance en saillie radiale vers l'extérieur, peut être amené en prise par complémentarité de formes, avec un creux dans la surface périphérique intérieure de l'évidement de réception (10).

7. Dispositif selon l'une des revendications 1 à 6, **caractérisé en ce que** l'élément en forme de pivot est pourvu d'une ouverture de passage centrale, qui le traverse, et est destinée au passage d'un élément de tige (32).

8. Dispositif selon l'une des revendications 1 à 7, **caractérisé en ce que** l'élément en forme de pivot peut, avec une surface de butée (30) du tronçon en porte-à-faux (26K), être collé temporairement sur une face frontale proximale (S) de l'implant (1) de dent.

9. Dispositif selon l'une des revendications 1 à 8, **caractérisé en ce que** l'élément en forme de pivot est un pivot de prise d'empreinte (23, 23') pour déterminer la position spatiale d'un implant médical dentaire (1).
